# EUROPÄISCHE PATENTANMELDUNG

(11) **EP 1 347 286 A1**
(43) Veröffentlichungstag der Anmeldung: **24.09.2003**
(21) Anmeldenummer: 03006086.7
(22) Anmeldetag: 19.03.2003
(51) Int. Cl.: G01N 21/956, G06T 7/00, G06K 9/00

(54) **Verfahren und Vorrichtung zur Kontrolle von Objekten**

(30) Priorität: 19.03.2002 DE 10212133
(71) Anmelder: SIEMENS AKTIENGESELLSCHAFT, 80333 München (DE)
(72) Erfinder: Müller, Peter, 76185 Karlsruhe (DE)

(57) **Zusammenfassung**

Die Erfindung betrifft ein Verfahren und eine Vorrichtung zur Kontrolle von Objekten mit einer Bildaufnahmeeinrichtung (5) und mit einer Bildverarbeitungseinrichtung (9, 10, 11), welche die Objektbilddaten entsprechend ihrer örtlichen Lage im Objektbild in Felder einer vorgegebenen Größe unterteilt und welche Fehler anhand eines Vergleichs der Objektbilddaten eines Feldes mit den Bilddaten eines dazu korrespondierenden Feldes eines Musterbildes ermittelt. Dadurch können lokale Defekte sicher detektiert werden.

## Beschreibung

Die Erfindung betrifft ein Verfahren zur Kontrolle von Objekten, bei welchem mit einer Bildaufnahmeeinrichtung ein Bild eines zu kontrollierenden Objekts aufgenommen und dazu Objektbilddaten erzeugt werden und bei welchem mit einer Bildverarbeitungseinrichtung die Objektbilddaten zur Ermittlung von Fehlern anhand eines Vergleichs mit Objektbilddaten eines Musterbildes ausgewertet werden, sowie eine Vorrichtung zur Durchführung des Verfahrens.

Die optische Suche, Lagebestimmung, Klassifikation und Prüfung von Objekten, die im Folgenden unter dem Begriff Objektkontrolle zusammengefasst werden, sind in der Automatisierungstechnik, insbesondere in der industriellen Bildauswertung, häufig wiederkehrende Aufgaben. Unter Klassifikation versteht man in diesem Zusammenhang, eine Entscheidung zu treffen, ob es sich bei einem in einem Bildausschnitt aufgenommenen Objekt um ein bestimmtes Objekt handelt oder nicht. Diese Klassifikation erfolgt meist durch Vergleich der Objektbilddaten mit den Bilddaten eines zuvor aufgenommenen Musters. Bei der Prüfung eines Objekts wird beispielsweise die Maßhaltigkeit oder Vollständigkeit des zu prüfenden Objekts im Vergleich zu dem Muster ermittelt und überwacht, ob zulässige Maximalabweichungen nicht überschritten werden. Für die Quantifizierung einer Abweichung kann beispielsweise ein flächenintegrales Fehlermaß eingesetzt werden, das als ein normierter, skalarer Wert beispielsweise einen Wertebereich zwischen 0 und 1 besitzt, wobei 0 für keine Übereinstimmung und 1 für eine ideale Übereinstimmung zwischen dem zu kontrollierenden Objekt und dem Muster stehen. Als ein solches Fehlermaß können z. B. ein Korrelationskoeffizient, der durch eine zweidimensionale Korrelation der Objektbilddaten mit den Musterbilddaten berechnet wird, oder die normierte Pixeldistanz dienen, die durch direkten Vergleich der Bilddaten zueinander korrespondierender Bildpunkte gewonnen wird. Die Berechnung der Pixeldistanz wird häufig auch als Patternmatching bezeichnet. Es wird die normierte Summe der Beträge der Differenzen zwischen den Datenwerten zueinander korrespondierender Pixel im Objekt und Musterbild berechnet. Der Nachteil eines solchen, über die gesamte Objektfläche berechneten Fehlermaßes liegt in seiner geringen Aussagekraft bezüglich lokaler Fehler. Ein beispielsweise ausschließlich durch Signalrauschen verursachter Fehler, der sich über das gesamte Objektbild verteilt, kann kaum unterschieden werden von einem kleineren, lokalen Defekt. Dieser Nachteil soll an einem Beispiel erläutert werden: ein Objekt habe im aufgenommenen Bild eine Größe von 100 x 100 Bildpunkten, es beinhaltet also 10.000 Bildpunkte, auch Pixel genannt. Selbst bei Wiedervorlage des Musterobjekts führen Signalrauschen und Abweichungen aufgrund der ortsdiskreten Abtastung bei der Bildaufnahme zu einem integralen Fehler von etwa 2 bis 5%. Dies entspricht 200 bis 500 Bildpunkten, bei welchen die Werte in den Bilddaten völlig voneinander abweichen, wenn man eine Übereinstimmung der Werte bei den übrigen Bildpunkten voraussetzt. Daraus ergibt sich, dass ein lokaler Fehler mit einer flächenhaften Ausdehnung bis etwa 200 Bildpunkte nicht sicher detektierbar ist, da ein entsprechendes Fehlermaß bereits durch die oben genannten Fehlerquellen erreicht werden kann.

Der Erfindung liegt die Aufgabe zugrunde, ein Verfahren und eine Vorrichtung zur Kontrolle von Objekten zu schaffen, mit welchen kleine, lokale Fehler mit größerer Zuverlässigkeit erkennbar sind.

Zur Lösung dieser Aufgabe weisen das neue Verfahren und die neue Vorrichtung der eingangs genannten Art die Merkmale auf, die in Anspruch 1 bzw. im kennzeichnenden Teil des Anspruchs 5 angegeben sind. In den abhängigen Ansprüchen sind vorteilhafte Weiterbildungen der Erfindung beschrieben. Die Erfindung hat den Vorteil, dass Fehler im Detail, d. h. Fehler von geringer Flächenausdehnung, weit sicherer erkannt werden können als dies bei der Verwendung integraler Fehlermaße der Fall wäre. Die oben angegebenen Nachteile werden somit zuverlässig vermieden.

Die Erfindung beruht auf der Erkenntnis, dass statistisch gestreute Fehler, die z. B. durch das beschriebene Signalrauschen oder die örtliche Diskretisierung, mit welcher Bildsensoren üblicherweise bei der Bilderzeugung behaftet sind, mit einer sehr niedrigen Wahrscheinlichkeit gehäuft in einem der Felder auftreten, in welche die Objektbilddaten entsprechend ihrer jeweils zugeordneten örtlichen Lage im Objekt unterteilt werden. Daher führen solche Fehler alleine normalerweise nicht dazu, dass ein Feld als fehlerhaft ermittelt wird. Diese Effekte führen somit in vorteilhafter Weise nicht mehr zu einer Verfälschung des Ergebnisses der Objektkontrolle bezüglich lokaler Defekte.

Ein weiterer Vorteil ist darin zu sehen, dass Fehler ab einer Flächenausdehnung von etwa dem Vierfachen der Fläche, die in einem Feld zur Feststellung eines Fehlers führt, sicher als lokale Defekte erkannt werden. Ein Fehler mit einer derartigen Ausdehnung wird nämlich auch dann erkannt, wenn er bei der Bildaufnahme gleichermaßen auf den einander zugewandten Ecken von vier benachbarten Feldern zu liegen kommt. Werden beispielsweise Felder mit einer Größe von 9 Bildpunkten als fehlerhaft ermittelt, wenn die Objektbilddaten zu mindestens fünf Bildpunkten des Feldes in erheblichem Maße von den Bilddaten der jeweils dazu korrespondierenden Bildpunkte des Musterbildes abweichen, so werden lokale Fehler ab einer Flächenausdehnung von zwanzig Bildpunkten sicher erkannt. Im Vergleich zu dem oben beschriebenen integralen Fehlermaß entspräche dies bei dem eingangs erläuterten Beispiel eines Objekts mit einer Flächenausdehnung von 10.000 Bildpunkten einem Gesamtfehler von 20/10.000 und somit einem prozentualen Fehler von 0,2%. Ein derartiger Fehler würde mit einem integralen Fehlermaß nicht erkannt, da bereits ohnehin vorhandene Fehlerquellen einen Fehler von 2 bis 5% bewirken. Die Sicherheit der Erkennung lokaler Fehler verbessert sich somit in diesem Beispiel um etwa einen Faktor zwischen 10 und 25. Der störende Einfluss des Signalrauschens ist daher erheblich verringert.

Aus dem angeführten Rechenbeispiel wird zudem deutlich, dass eine sichere Detektion der Fehler insbesondere dann erreicht wird, wenn die Größe der Felder vorteilhaft in der Größenordnung der kleinsten zu detektierenden Fehler vorgegeben wird.

Die Feldgrenzen können in vorteilhafter Weise so gewählt werden, dass benachbarte Felder einander um die Breite zumindest eines Bildpunktes überlappen. Das hat den Vorteil, dass kleinere Defekte auch dann sicher erfasst werden können, wenn sie im Rand oder Eckbereich einander benachbarter Felder liegen.

Anhand der Zeichnungen, in denen ein Ausführungsbeispiel der Erfindung dargestellt ist, werden im Folgenden die Erfindung sowie Ausgestaltungen und Vorteile näher erläutert.
- Figur 1: zeigt eine Vorrichtung zur Kontrolle von Objekten und
- Figur 2: ein Beispiel eines aufgenommenen Bildes mit binärer Grauwertcodierung.

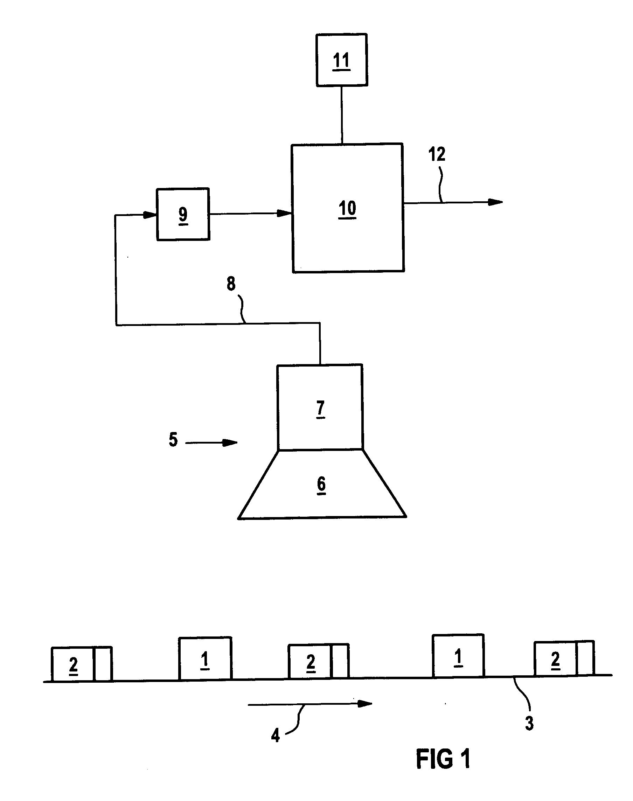

In Figur 1 ist ein Blockschaltbild einer Vorrichtung zur Kontrolle von Objekten 1 und 2 dargestellt. Durch ein Förderband 3 werden die Objekte 1 und 2 in Laufrichtung des Förderbandes 3, die durch einen Pfeil 4 angedeutet ist, an einer Bildaufnahmeeinrichtung 5, die zur Aufnahme zumindest jeweils eines Bildes der zu kontrollierenden Objekte 1 und 2 dient, vorbeigeführt. Die Bildaufnahmeeinrichtung 5 besteht im Wesentlichen aus einem Objektiv 6 und einem CCD-Sensor 7, auf welchem die Objekte 1 und 2 mit Hilfe des Objektivs 6 abgebildet werden. Der CCD-Sensor 7 liefert dem aufgenommenen Bild entsprechende Signale 8, die in einem Bildspeicher 9 als Bilddaten abgelegt werden. Die Bilddaten sind durch eine Recheneinheit 10 auslesbar, welche zur Durchführung der bei der Bildverarbeitung erfolgenden Berechnungen vorgesehen ist. Eine Tastatur als Eingabeeinrichtung und Bildschirm als Anzeigeeinrichtung, die in üblicher Weise zur Bedienung der Recheneinheit 10 vorhanden sind, sind in der Zeichnung der Übersichtlichkeit wegen nicht dargestellt. Zur Hinterlegung der Bilddaten eines aufgenommenen Musters ist ein Speicher 11 vorhanden, auf welchen ebenfalls durch die Recheneinheit 10 zugegriffen werden kann. Die Recheneinheit 10 liefert ein Signal 12 zur Anzeige des Ergebnisses der Objektkontrolle. Dieses Signal 12 kann beispielsweise Informationen über den jeweiligen Typ der zu kontrollierenden Objekte 1 und 2, über deren Qualität, über deren Position, beispielsweise als Lage des Objektschwerpunkts in einem kartesichen Koordinatensystem mit Achsen x und y, oder über deren Drehlage enthalten. Anhand dieses Signals 12 können weitere Maßnahmen in einer fertigungstechnischen Anlage abgeleitet werden, beispielsweise das Aussortieren defekter Objekte.

Bei dem zur Objektkontrolle durchgeführten Verfahren wird zunächst ein Einzelbild eines Musters, das zuvor als fehlerfrei beurteilt wurde, aufgenommen. Die Bilddaten des Musterbildes werden in dem Speicher 11 hinterlegt.

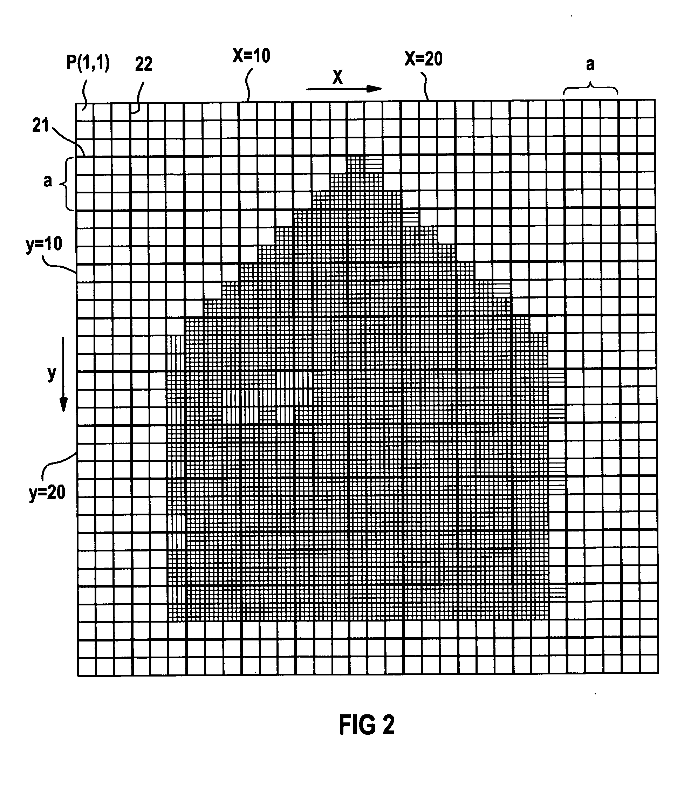

Die in einer binären Codierung der Bilddaten schwarzen Bildpunkte eines Musterbildes sind in Figur 2 mit einer vertikal verlaufenden Schraffur dargestellt. In dem gezeigten Beispiel wird ein Objekt mit vollständig gefüllter Innenfläche und einer Kontur verwendet, die im Wesentlichen einer Seitenansicht eines Hauses mit Giebeldach entspricht.

Danach wird ein Bild eines zu kontrollierenden Objekts aufgenommen. Die hierzu gehörigen schwarzen Bildpunkte sind in Figur 2 mit einer horizontal verlaufenden Schraffur gekennzeichnet. Bildpunkte, die sowohl im Musterbild als auch im Bild des zu kontrollierenden Objekts schwarz sind, erhalten folglich eine Schraffur mit sowohl vertikal als auch horizontal verlaufenden Linien, so dass sich insgesamt eine karierte Schraffur ergibt. In beiden aufgenommenen Bildern helle Bildpunkte besitzen keine Schraffur. An den entweder horizontal oder vertikal schraffierten Bildpunkten herrscht somit keine Übereinstimmung zwischen den jeweiligen Bilddaten im Musterbild und im Bild des zu kontrollierenden Objekts.

Eine binäre Codierung der Bilddaten wurde aus Gründen einer deutlicheren Darstellung gewählt. Selbstverständlich ist die Erfindung abweichend vom gezeigten Ausführungsbeispiel mit beliebigen anderen Codierungen der Bilddaten anwendbar.

Die einzelnen Bildpunkte oder Pixel werden im Folgenden durch Angabe ihrer Lage in einem kartesichen Koordinatensystem mit einer Abszisse x und einer Ordinate y als P(x,y) bezeichnet. Beispielsweise befindet sich links oben im Bild das Pixel P(1,1). Jeweils neun Bildpunkte werden zu quadratischen Feldern zusammengefasst, deren Kantenlänge a derjenigen von drei Bildpunkten entspricht. Bei einer normierten Breite der Pixel ist dies ein Wert a = 3. Die Felder umfassen somit 3 x 3 Pixel. Die Grenzen zwischen benachbarten Feldern sind jeweils durch dickere Linien, beispielsweise die Linien 21 und 22, markiert. Die Bestimmung kleinerer Fehler erfolgt nun lokal für jedes Feld. Übereinstimmungen zwischen den Bilddaten des Musters und den Bilddaten des zu kontrollierenden Objekts herrscht an all den Bildpunkten, die keine Schraffur und die sowohl eine vertikale als auch eine horizontale Schraffur aufweisen. Pixel mit lediglich horizontaler Schraffur, hier die Pixel P(17,4), P(20,7), P(24,11), P(27,16), P(27,18), P(27,23), P(27,24) und P(27,28) wurden beim zu kontrollierenden Objekt als dunkel gemessen, während für diese Pixel in den Bilddaten des Musterbildes helle Helligkeitswerte erfasst wurden. Eine Ursache für diese Abweichungen kann beispielsweise in der ortsdiskreten Abtastung bei der Bildaufnahme gesehen werden. In diesem Beispiel einer Bildkontrolle werden Felder als nicht fehlerhaft erkannt, wenn die auf die Feldgröße bezogene Anzahl der nicht übereinstimmenden Pixel kleiner als 2(a-1)/a² ist, im gezeigten Ausführungsbeispiel also kleiner als 5/9. Es wird somit für keines der oben genannten Pixel ein fehlerhaftes Feld erkannt. Dasselbe gilt für die Pixel P(14,6), P(13,7), P(10,10), P(6,14), P(6,15), P(6,18), P(6,21), P(6,24), P(6,25) und P(6,28), die im Bereich des linken Objektrandes liegen und lediglich in den Bilddaten des Musters als dunkle Bildpunkte erkannt wurden. Anders verhält es sich bei einem im Inneren des Objektbildes geeigneten lokalen Fehler. In einem Pixelbereich von x = 9 bis 13 und y = 16 bis 18 wurden an 8 Bildpunkten im Bild des zu kontrollierenden Objekts abweichend von den Bilddaten des Musters helle Stellen erfasst. Von diesen Bildpunkten liegen sechs, nämlich die Bildpunkte P(10,17), P(10,18), P(11,17), P(12,16), P(12,17) und P(12,18), im selben Feld. Dieses Feld wird somit als fehlerhaft erkannt und der lokale Fehler des zu kontrollierenden Objekts detektiert. Der auf das gesamte Objekt bezogene Anteil fehlerhafter Felder kann zum besseren Vergleich berechnet werden als Quotient aus der Anzahl der als fehlerhaft erkannten Felder und der Anzahl der Gesamtfelder des Objektbildes.

An diesem Ausführungsbeispiel wird deutlich, dass lokale Defekte durch ein integrales Fehlermaß nur schlecht detektierbar sind: lediglich acht der voneinander abweichenden Helligkeitswerte der Bildpunkte sind durch den eigentlich zu detektierenden Fehler, 18 durch andere Fehlerquellen, hier insbesondere Fehler durch ortsdiskrete Abtastung, verursacht. Erst die Einteilung der Bilddaten in Felder und die Beurteilung dieser Felder auf eine unzulässig große Abweichung ermöglicht ohne zusätzlichen großen Rechenaufwand eine sichere Detektion lokaler Fehler. Dieser Vorteil gewinnt noch an Bedeutung, wenn zur Bildaufnahme eine größere Orts- und Helligkeitsauflösung verwendet wird. Einzelne Bildpunkte können dann beispielsweise als fehlerhaft beurteilt werden, wenn die entsprechenden Werte der Bilddaten um mehr als einen vorgegebenen Betrag voneinander abweichen.

## Patentansprüche

1. Verfahren zur Kontrolle von Objekten, bei welchem mit einer Bildaufnahmeeinrichtung (5) ein Bild eines zu kontrollierenden Objekts (2) aufgenommen und Objektbilddaten erzeugt werden, bei welchem mit einer Bildverarbeitungseinrichtung (9, 10, 11) die Objektbilddaten entsprechend ihrer jeweils zugeordneten örtlichen Lage im Objektbild in mehrere Felder einer vorgegebenen Größe, die jeweils mehrere Bildpunkte umfassen, unterteilt werden und bei welchem Fehler anhand eines Vergleichs der Objektbilddaten eines Feldes mit den Objektbilddaten eines dazu korrespondierenden Feldes eines Musterbildes ermittelt werden.

2. Verfahren nach Anspruch 1, **dadurch gekennzeichnet, dass** die Größe der Felder in der Größenordnung der kleinsten zu detektierenden Fehler vorgegeben wird.

3. Verfahren nach Anspruch 1 oder 2, **dadurch gekennzeichnet, dass** ein Feld als fehlerhaft ermittelt wird, wenn die Objektbilddaten zu mehr als einer vorgegebenen Anzahl von Bildpunkten des Feldes um mehr als einen vorgegebenen Betrag von den Bilddaten der jeweils dazu korrespondierenden Bildpunkte des Musterbildes abweichen.

4. Verfahren nach einem der vorhergehenden Ansprüche, **dadurch gekennzeichnet, dass** benachbarte Felder einander um die Breite zumindest eines Bildpunktes überlappen.

5. Vorrichtung zur Durchführung des Verfahrens nach einem der vorhergehenden Ansprüche mit einer Bildaufnahmeeinrichtung (5) zur Aufnahme eines Bildes eines zu kontrollierenden Objekts (2) und zur Bilddatenerzeugung sowie mit einer Bildverarbeitungseinrichtung (9, 10, 11), die derart ausgebildet ist, dass die Objektbilddaten entsprechend ihrer jeweils zugeordneten örtlichen Lage im Objektbild in mehrere Felder einer vorgegebenen Größe, die jeweils mehrere Bildpunkte umfassen, unterteilt werden, und dass Fehler anhand eines Vergleichs der Objektbilddaten eines Feldes mit den Bilddaten eines dazu korrespondierenden Feldes eines Musterbildes ermittelt werden.
